# EUROPEAN PATENT APPLICATION

(11) **EP 2 088 519 A1**
(43) Date of publication of application: **12.08.2009**
(21) Application number: 08002452.4
(22) Date of filing: 11.02.2008
(51) Int. Cl.: G06F 17/30, H04L 12/58

(54) **Conferencing**

(71) Applicant: Nokia Siemens Networks Oy, 02610 Espoo (FI)
(72) Inventor: Garcia, Miguel Angel, 00690 Helsinki (FI)
(74) Representative: Bruglachner, Thomas E.

(57) **Abstract**

A method of web browsing in which downloading of a web page containing content at a first terminal in a form determined by the terminal capabilities and user settings of the first terminal causes the address of the web page containing content to be sent automatically to a second terminal to enable the second terminal to download the content of the page in an independent downloading operation from that carried out by the first terminal so that the content of the page can be displayed at the second terminal in a form determined by the terminal capabilities and user settings of the second terminal.

## Description

This invention relates to the provision of content at a plurality of locations. It is particularly, but not exclusively related to co-web browsing within an online conference in which several users of terminals are able to visit the same web page at broadly the same time.

Computer program based tools for sharing content so that it can be viewed on user terminals, typically computer terminals, at a plurality of locations are known. These are sometimes referred to as online conferencing applications. There are a number currently available which enable this, for example Microsoft NetMeeting and IBM Lotus Sametime. In the case of Sametime, this is a application comprising a group of products which enable group collaboration over the Internet so that geographically dispersed individuals (whether colleagues or otherwise) can view identical content on respective terminals, whether this be instant messaging, sharing a whiteboard (that is a part of a screen which free-form words and pictures can be drawn or written), sharing applications, sharing desktops, and file transfers. In the majority of cases, the application works so as to take some or all of what is displayed on the screen of a particular user's terminal (referred to in the following as a sharing terminal) and to transmit it to other users' terminals (referred to in the following as a displaying terminal) so that they can see the same things being displayed. Sending of display content in this way is referred to a sharing a screen.

In use, online conferencing applications set up a centralised conference server. Participants use their terminals to join a given conference, identified by a conference identifier and a password, so that only authorised participants are allowed to join. Once the conference is set up, a participant is able to start collaboration, for example, by sharing some or all of the display (computer screen) of his terminal. Snapshot images of the shared screen are encoded and transmitted to the conference server. The conference server sends copies of the images to the terminals of the other participants. The online conferencing application decodes the image and renders it in the proper place in the displays of recipient (displaying) terminals. Application sharing also allows a sharing participant (at the sharing terminal) to allow other participants to remotely control his terminal. This allows participants to carry out various activities on the display of a remote terminal including using their own mouse to move the mouse curser, insert text, draw figures, etc.

Most of the centralised conferences are implemented with at least a control protocol and a user-plane protocol. The control protocol can be the Session Initiation Protocol (SIP). SIP is an application-layer control (signalling) protocol for creating, modifying, and terminating sessions with one or more participants. The sessions can include, among other things, Internet telephone calls, multimedia distribution, and multimedia conferences. SIP invitations used to create sessions carry session descriptions that allow participants to agree on a set of media streams (such as audio, video, or text) and a compatible set of media types. SIP makes use of elements called proxy servers to help route requests to a participant's current location, authenticate and authorise users for services, implement provider call-routing policies, and provide features to users. SIP also provides a registration function that allows users to upload their current contact information for use by proxy servers. SIP runs on top of several different transport protocols, such as TCP and UDP. SIP is commonly used as a session control protocol.

Within a conference, there is typically a set of media streams that carry streaming media, such as real-time audio or video, (also referred to as a multimedia session). A multimedia session takes place between a set of multimedia senders and receivers and comprises the data streams flowing from the senders to the receivers. A multimedia conference is an example of a multimedia session. Although there is often a plurality of receivers, there might instead only be one sender and one receiver. In addition, only one media type might be being shared, for example co-web browsing.

The Real-Time Transport Protocol (RTP) is often used to transport samples of audio, video, or some other media, encoded according to certain rules. RTP defines a standardised packet format for delivering audio, video, and some other content over IP networks. RTP runs on top of several different transport protocols, such as TCP and UDP. Message sessions are set up via a rendezvous or session creation protocol such as the Session Initiation Protocol.

Within a conference, there can also be non-streaming media to be transferred, for example, an instant message, or a file. These are typically transported with the Message Session Relay Protocol (MSRP) (RFC 4975). MSRP is a protocol for transmitting a series of related messages nearly in real-time in the context of a session. The content carried over MSRP messages can be of any type, including text, HTML web pages, files of any kind, etc. MSRP runs on top of several different connection-orientated transport protocols, such as TCP and TLS. Message sessions are treated like any other media stream when set up via a rendezvous or session creation protocol such as the Session Initiation Protocol.

Centralised conferences are typically implemented with the Session Initiation Protocol as the control protocol and at least one of RTP and MSRP as the user-plane protocol.

Centralised conferences may also have floor control. Floor control allows users of multimedia applications to use and share resources such as remote devices, distributed data sets, telepointers, or continuous media such as video and audio, without access conflicts. Floor control enables applications in a conference to provide users with coordinated (shared or exclusive) access to these resources. Floors are temporary permissions granted dynamically to collaborating users in order to mitigate race conditions and guarantee mutually exclusive resource usage. Usually a floor chair manages a floor (grants, denies, or revokes a floor). Usually, but not necessarily, the floor chair is a role allocated to the participant who is sharing an application (or a terminal screen). Floor participants request access to shared resources. A floor control server, which is typically co-located with the conference server, manages floor requests.

The Binary Floor Control Protocol (BFCP) is a protocol that can be used in conjunction with SIP, RTP, and MSRP for controlling floors in a centralised conference.

An example of online conferencing, whether by screen sharing or application sharing, is web-browsing, sometimes referred to as co-web browsing. In this case, a user has an online conferencing application active whilst he is using a web-browsing application to browse websites, and the online conferencing application has been instructed to either share his screen with other users or to share what is presented on his screen by the web-browsing application. Accordingly, other users involved in the online conference will see the web-browsing activities on the sharing terminal. Whether a user shares his screen or just the web-browsing application as presented in a window, other participants receive the pixels of such screen or window. The participant who shares the screen can also allow control to the other participants, in which case, mouse movements, clicks, and keyboard input can be sent back to the sharing participant to render the output visually. There are several protocols which enable this, such as the Remote Frame Buffer protocol used by the Virtual Network Computing (VNC) family of applications. Another one is T.120 developed by the ITU-T.

There are several disadvantages with known online conferencing applications used for web browsing. It can involve transmitting a relatively large amount of data representative of what is displayed at a sharing terminal to a remote displaying terminal, and a relatively large amount of processing and handling of the data in a centralised conference server. Transmitting data which is representative of what is displayed on screen can also cause problems relating to privacy. For example, if a sharing terminal is being used to browse a website in a secure session, such as one where a secure/secret login is required, for example if the website and session are concerned with web banking, co-web browsing can present to a participant at a remote displaying terminal information which the participant at the sharing terminal would prefer not to share. Finally, for users of the displaying terminals, since the web-browsing is being carried out at a remote terminal (the sharing terminal) since this is not done at a user's own terminal this means that any of the associated advantages of using one's own terminal, such as viewing a display configured to one's own preferences (for example font size and colours) or being able to interact with the browsing application during browsing (for example saving a bookmark), are not provided. Typically web servers are able to render web pages according to the size and capabilities of the web browser on a device. For example, a user who is browsing a web page from a mobile phone will typically get a web page which is customised to the number of colours displayable by the screen, the size of the screen, the font size, etc. In the case in which the user of the sharing terminal is using a normal desktop computer and one or more participants are using mobile devices as displaying terminals, these mobile participants will not get mobile-customised web pages, but will instead get fully laid-out web pages as they appears on the display of the sharing terminal. These disadvantages apply whether the co-web browsing is based screen sharing, that is what is displayed at a sharing terminal is sent to and displayed at a remote displaying terminal, or application sharing in which only the parts of a display related to a particular application are displayed at a remote displaying terminal. Certain of these disadvantages also apply in cases in which participants in an online conference allows control of their terminals to the other participants.

According to a first aspect of the invention there is provided a method of content rendering in which downloading content from an address at which the content is available for download at a first terminal so that the content can be rendered in a form determined by at least one of capabilities and user preferences of the first terminal causes the address to be sent to a second terminal to enable the second terminal to download the content from the address in an independent downloading operation from that carried out by the first terminal so that the content can be rendered at the second terminal in a form determined by at least one of capabilities and user preferences of the second terminal.

Preferably, the content can be browsed in a form determined by the capabilities of the first terminal and/or the capabilities of the second terminal.

Preferably, rendering the content means displaying the content visually on a display of first terminal and/or the second terminal.

Preferably, the content is a web page.

Preferably, the address at which the content is stored is automatically sent to the second terminal. Alternatively, the address may be sent in response to a permission to send given by a user of the first terminal. Preferably, downloading the content at the second terminal occurs as an automatic response to receiving the address. Alternatively, downloading the content at the second terminal may occur in response to a permission to download given by a user of the second terminal.

The rendering may take place within a multimedia session. In one embodiment, the rendering is co-web browsing in which the second terminal is arranged to display a web page as a consequence of it having been browsed by the first terminal. Preferably, this is a common web browsing experience for users at separate locations. The invention may provide a way of sharing content addresses, for example within a multimedia session, such as a multimedia online conference for sharing information.

The term capabilities in respect of the first and second terminals may include things such as size of screen, number of colours, resolution, data transfer capability of the terminal (for example bit rate). It may relate to a single one of these features. The term user preferences (or user settings) may include font size, font, colours, whether javascript is enabled, whether downloading of images is permitted. It may relate to a single one of these features. User preferences may be changeable by a user of a terminal according to how the user would prefer the "look" of what is displayed on the terminal to be. In one embodiment of the invention, the capabilities and/or user preferences or user settings of the first terminal may be different to those of the second terminal.

According to the invention, since an address representing the location of content which is available for downloading is sent, it is not necessary to send information representative of what is rendered at the first terminal although this might also be sent as part of an online conference.

Preferably, the address is sent between endpoints. One of the endpoints may be a conference server. Preferably, the address is transferred from the first terminal to the second terminal via a conference server.

Preferably, the address is transferred in a protocol envelope. Preferably, the address is encapsulated into a protocol message, for example in an MSRP message. The address might be encapsulated together other data, such as a timestamp. Preferably, on receipt of the address, it can be invoked with the indicated protocol.

Preferably the content is downloaded from a web server. This may be downloaded over connections between the terminals which do not pass through the conference server.

Preferably, at least one of the first and second terminals is a device configured to have a wireless connection with a common server. At least one of the first and second terminals may be a mobile phone or other device having WAN capability, for example cellular wireless capability, or may be a device having WLAN, WIMAX, or other wireless capability.

Preferably, an action taken by a user on the rendered content at the first terminal is sent to the second terminal. In one embodiment, the action taken by the user represents a click on a button on a displayed web page.

According to a second aspect of the invention there is provided a system for enabling content rendering at a first terminal and at a second terminal, the system comprising:
the first terminal, the second terminal, and a server,
the first terminal being configured to download content and
to render the content in a form determined by at least one of capabilities and user preferences of the first terminal, the first terminal being configured to act in response to the downloading of content to send the address at which the content is available for download to the second terminal
the second terminal being configured to receive the address and to download the content in an independent downloading operation from that carried out by the first terminal, the second terminal being configured to render the content terminal in a form determined by at least one of capabilities and user preferences of the second terminal.

According to a third aspect of the invention there is provided an online conference server for enabling rendering of content at a first terminal and at a second terminal, the first terminal being configured to download content from an address at which the content is available for download and to render the content in a form determined by at least one of capabilities and user preferences of the first terminal, the first terminal being configured to act in response to downloading of content to send the address to the server, wherein the server is configured to receive the address from the first terminal and to send it to the second terminal to enable the second terminal to download the content in an independent downloading operation from that carried out by the first terminal, the second terminal being configured to render the content terminal in a form determined by at least one of capabilities and user preferences of the second terminal.

According to a fourth aspect of the invention there is provided a terminal capable of rendering of content from an address at which the content is available for download, the content being capable of being rendered at another terminal, the terminal being configured to:
download the content and to render the content in a form determined by at least one of capabilities and user preferences of the terminal,
to act in response to the downloading of content to send the address at which the content is available for download to the other terminal
the other terminal being configured to receive the address and to download the content in an independent downloading operation from that carried out by the first terminal, the second terminal being configured to render the content terminal in a form determined by at least one of capabilities and user preferences of the second terminal.

According to a fifth aspect of the invention there is provided a computer program product comprising software code that when executed on a computing system performs a method of content rendering comprising downloading content from an address at which the content is available for download at a first terminal so that the content can be rendered in a form determined by at least one of capabilities and user preferences of the first terminal causes the address to be sent to a second terminal to enable the second terminal to download the content from the address in an independent downloading operation from that carried out by the first terminal so that the content can be rendered at the second terminal in a form determined by at least one of capabilities and user preferences of the second terminal.

Preferably, the computer program product is stored on a computer-readable medium.

An embodiment of the invention will now be described, by way of example only, with reference to the accompanying drawings in which:
Figure 1 shows a conference architecture;
Figure 2 shows the flow of messages in an online conference;
Figure 3 shows co-web browsing according to the invention;
Figure 4 shows the flow of messages in an online conference including co-web browsing according to the invention;
Figure 5 shows the steps involved in co-web browsing according to the invention on the sending side;
Figure 6 shows the steps involved in co-web browsing according to the invention on the recipient side; and
Figure 7 shows an embodiment of the invention implemented in a terminal.

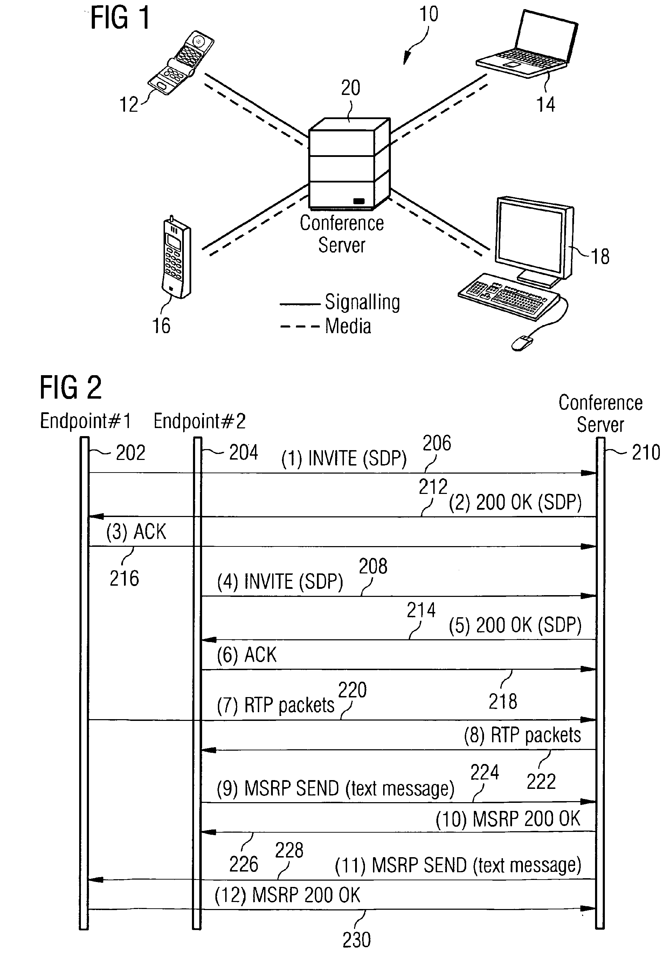

Figure 1 shows a conference architecture 10 in which four terminals 12, 14, 16, and 18 are involved in an online conference which is controlled by a conference server 20. Accordingly, the participating terminals 12, 14, 16, and 18 only have direct signalling connections (and connections for data transfer, for example of media files and streams) with the conference server 20 (although of course these connections might go via proxies). The terminals 12, 14, 16, and 18 can be different types of terminal as shown in Figure 1 such as a mobile phone, a PDA, a desk computer, and a laptop computer. Accordingly, the connections between the participating terminals and the conference server can be wired or wireless (for example over WLAN, WAN, cellular wireless, or any other wireless connection) as appropriate.

In this example, the signalling is carried out according to SIP, but any other suitable signalling protocol, such as H.323, could be used. The choice of media protocol depends on the actual media which is to be transferred. If streaming media such as audio or video is being sent, then the Real-time Transport Protocol (RTP) is used. If text messages, images, or something which can be represented as a MIME (Multipurpose Internet Mail Extensions) object, is being sent, then a suitable protocol is the Message Session Relay Protocol (MSRP). In an embodiment of the invention in which an online conference is being held which involves media components from these two protocols, both RIP and MSRP can be used.

An online conferencing session is set up between two endpoints, for example between two terminals. One endpoint sends a SIP INVITE request addressed to another endpoint. This other endpoint can be the conference server or it can be one of the terminals 12, 14, 16, and 18. The INVITE request may traverse one or more SIP proxies that will route the SIP INVITE request towards its destination.

From the point of view of signalling, the conference server 20 and the terminals 12, 14, 16, and 18 behave as endpoints.
The conference server 20 runs an online conference application which duplicates each media stream (audio, video, messaging, etc.) and transmits it to each other participant.

Figure 2 shows the flow of messages in SIP in setting up an online conference. This message flow can take place within the architecture of Figure 1. In this case, the online conference has two terminals 202 and 204. Each terminal 202, 204 sends an INVITE request (referred to as 206 and 208 in the Figure) to a conference server 210. This request contains a session description protocol (SDP) object that describes the types of media stream that the endpoint wants to establish.
The conference server 210 replies with a 200 OK response (referred to as 212 and 214) that also contains a session description, for example, according to the Session Description Protocol, including the agreed media types. Finally, the terminals 202 and 204 acknowledge with an ACK message (referred to as 216 and 218).

In a SIP online conference, any terminal can send media. In this example, the terminal 202 is instructed to send an RTP packet to the conference server 210 which it sends in a message 220. The conference server 210 sends a copy of this packet to each other terminal, so, in this example, to the terminal 204 in.message referred 222. Typically, streaming media such as audio and video is transported with RTP, so if media such as these were being sent, rather than a single RTP packet, there would be a continuous flow of RTP packets until streaming ceases.

Each terminal 202 and 204 can also send non-streaming media, for example, a text message. This is represented in a message 224 in the Figure, where the terminal 204 sends an MSRP SEND message that contains text. The conference server 210 acknowledges the reception of the message 224 by returning a message 226, and sends a copy of the MSRP SEND request in a message 228 to each other terminal including terminal 202, which acknowledges the reception in a 200 OK message 230.

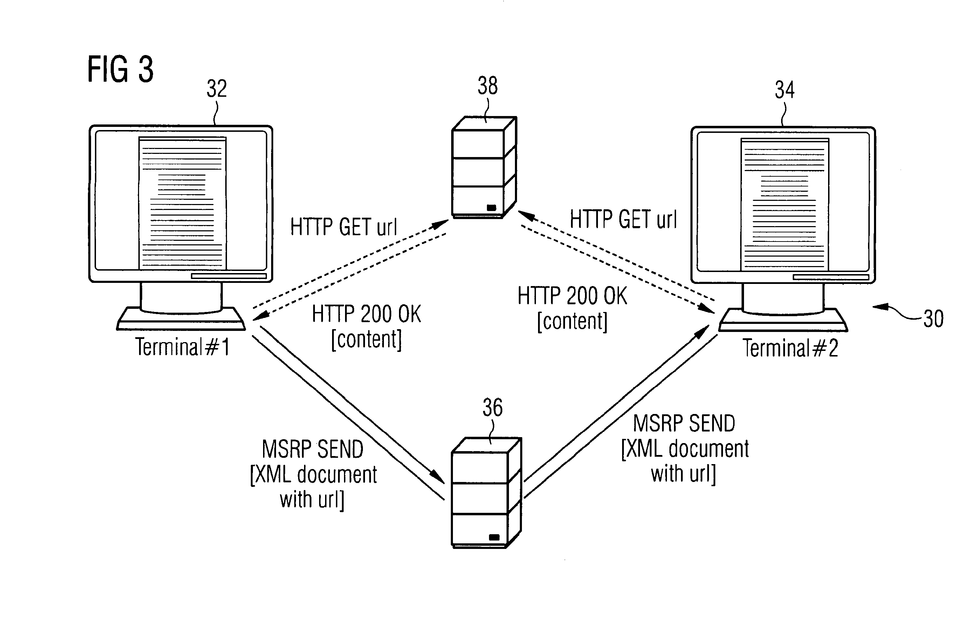

The architecture of Figure 1 will now be further described with reference to Figure 3. In the following example, a method of sending information according to the invention is described.

Figure 3 shows a conference architecture 30 with two terminals 32 and 34 connected to a conference server 36. In addition, each of the two terminals 32 and 34 is also connected to various web servers by means of the Internet including web server 38. The terminals 32 and 34 are able to download web content from the web servers and to have a co-web browsing online conference as will be described. It should be noted that when considering the architecture 30 from the perspective of co-browsing, the conference server 36 is not an endpoint since it does not run a co-web browsing application but rather just controls the online conference and receives data and conveys it to the appropriate endpoint(s). As mentioned in the foregoing, the terminals 32 and 34 can be devices which have a wireless connection with the conference server 36.

Typically, in downloading web content, a web browser is opened at one of the terminals. There are many available web browsers including Internet Explorer, Firefox, Safari, etc. In this case, the terminal 32 has downloaded a web page, identified by a URL (Uniform Resource Locator), which is done by the terminal 32 sending the "HTTP GET url" request to the web server 38. The terminal 32 sends a "HTTP GET url" request to the web server 38 in order to download the web page identified by the particular URL specified in the GET request. In response, the web server 38 sends a HTTP 200 OK response (not shown in Figure 3) that carries the web page to be rendered at the terminal 32. The web browser in the terminal uses an internal interface to a share web browsing module (to be described in the following) to send the URL of the downloaded web page to other terminals involved in the co-web browsing activity.

The conference server 36 then distributes the MSRP SEND requests to the other terminals, in this case, to the terminal 34. The conference server duplicates the MSRP messages it receives to create a copy for each participating terminal. In fact, the conference server is a MSRP recipient co-located with an MSRP sender, so it re-generates the messages received prior to forwarding them. This might involve taking the received messages and appending address information, for example a header, so the re-addressed MSRP messages can be sent point-to-point to terminals. Accordingly, the terminal 34 receives the MSRP SEND request and receives the URL in an XML document encapsulated in the MSRP SEND request from the conference server 36. The terminal 34 then parses the MSRP SEND request and the XML document it contains, extract the URL, downloads the web page from the web server (using a HTTP GET "url" request), and renders the received web page to the user.

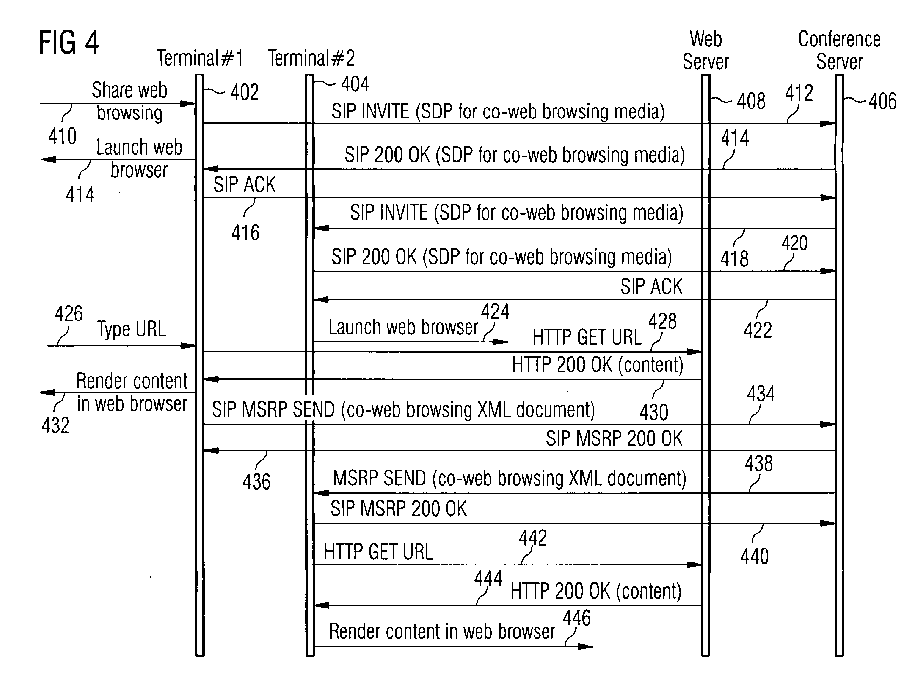

The messages involved in this process and further steps will now be described with reference to Figure 4. This shows the flow of messages between a first terminal 402, a second terminal 404, a conference server 406, and a web server 408 in a co-web browsing activity according to the invention. To start the co-web browsing activity, an online conference is started in a normal way. The conference will typically be initiated by the user of one terminal (for example, terminal 404) and other participants (for example, the user of terminal 404) will be invited and some or all may choose to attend. As discussed above in relation to Figure 2 establishing an online conference will comprise one or several different types of media streams, including audio, video, chat between endpoints and a centralised conference server. Once the online conference is running, a user can elect to start a co-web browsing activity 410. This would typically be done by clicking on an icon provided for this task or by selecting a suitable menu option. As a consequence of such a selection, the terminal sends a SIP INVITE 412 to the conference server 406, the SIP INVITE request containing a description of a new media stream for the co-web browsing application. Additionally, a web browsing application is started 414 in the terminal 402. The conference server 406 receives the SIP INVITE request 412, acknowledges to the sender with a 200 OK response 414 (this is acknowledged by the terminal 402 with ACK 416) and forwards the SIP INVITE request 418 to each of the terminals of the other participants (in this case the terminal 404). The terminal 404 receives the forwarded SIP INVITE request, and acknowledges by sending a 200 OK response 420 back to the conference server 406 (this is acknowledged by the conference server 406 with ACK 422). The terminal 404 also launches a local web browser for the co-web browsing application 424. Once this is completed, both terminals 402 and 404 have established a new MSRP session with the conference server for the purpose of co-web browsing. If an existing MSRP session was already set up for other purposes, such as an instant messaging application, it can be re-used for the purpose of co-web browsing. There might be additional media streams in the session, such as audio, video, text messaging, etc.

Once the web browsing application at terminal 402 has been started, it can be used to browse web pages. A URL is input 426 into the terminal 402 by any convenient means such as typing it in, clicking on a link or a web page, or selecting a bookmark. The terminal 402 sends a HTTP GET "url" request 428 to the web server 408 which then begins the process of downloading 430 the web page to the terminal 402. As the content of the web page is being downloaded, it can be rendered 432 in the web browser of the display of the terminal 402.

As a consequence of the downloading of the content, the terminal 402 sends a SIP MSRP SEND message 434 containing the URL of the web page to the conference server 406 which responds by sending a SIP MSRP 200 OK message 436 to the terminal 402. The conference server 406 also sends a MSRP SEND message 438 containing the URL of the web page to the terminal 404. The nature of the MSRP SEND message containing the URL will be explained in more detail below. The terminal 404 responds by sending a SIP MSRP 200 OK message 440 to the conference server 406. Now that the terminal 404 has the URL, it can send a HTTP GET "url" request 442 to the web server 408 which then begin the process of downloading 444 the web page to the terminal 404. As the content of the web page is being downloaded, it can be rendered 446 in the web browser of the display of the terminal 404.

In the embodiment of the invention described in the foregoing with reference to Figures 3 and 4, the MSRP is used to convey information relevant to co-web browsing in MSRP SEND requests. In this case, a payload in the form of an XML document is used convey the URL, timestamp, and any other additional parameters which are required or desired from one endpoint to another one, such as from a terminal of an online conference to the conference server. This transfer happens so that there is no store-and-forward operation (for example, the message is not stored in a server such as an email server) but is instead transferred and processed in real time to the remote terminal. This XML document is identified with a MIME type, for example, application/co-web-browse+xml, and contains placeholders for encoding the URL, an action (optionally), and the timestamp. Recipients of this message use the timestamp to determine the time at which the web browsing occurred in a remote endpoint, so that in the event of a failure, expired or old messages can be safely discarded. In addition to, or instead of, transferring the URL, the endpoint may send an action. For example, the action can indicate "the user just clicked on the SEND button in the form". This is the case when a downloaded page contains Javascript, which may indicate, for example, the javascript function that is invoked when the user clicks on a button or hovers over a certain area.

It should be noted that in this embodiment of the invention, the activating activity which causes a share web browsing module (described in the following) to send the URL of the downloaded web page to other terminals involved in the co-web browsing activity is when the HTTP 200 OK response is received at the sharing terminal indicating that the web page data has been downloaded. Specifically, this is the HTML code for rendering the screen containing links to images to be downloaded as part of the web page and possibly text, or in other words a skeleton of the web page. One advantage of waiting for this response as the activating activity is that if there is a redirection operation on downloading a web page, for example if a 302 redirect response is received, rather than sending the URL to the displaying terminal, it is only when the actual web page for downloading is in the process of downloading that the displaying terminal is instructed to download the content of the actual web page. Furthermore, the approach saves on unnecessary actions on the part of the displaying terminal in the case that a time out or other error message is received.

In an alternative embodiment of the invention, a user at the sharing terminal can have manual control. In this case, on browsing to web page in a co-web browsing activity, an option is presented to the user to ask whether the URL being browsed is to be sent to displaying terminals and the user can permit or prevent this from occurring. This is a useful safeguard in the event that the user of the sharing terminal is browsing a web page which for some reason he would like to keep private from other users participating in a co-web browsing activity.

Similar features can exist on terminals operating to receive URLs in a co-web browsing activity. A displaying terminal can be configured to download automatically content from a web page specified in a URL sent in the MSRP message (or carry out an action). Alternatively, a user of a displaying terminal can be given the option of whether such content download is to occur, for example with him being presented with the URL and being able to choose if content will be downloaded.

As mentioned in the foregoing, in online conferencing, the display of a terminal referred to as a sharing terminal can be shared with terminals referred to as displaying terminals. It should be noted that sharing is not the same as control when used in the sense of floor control which was discussed in the foregoing. Indeed, floor control might be used in a system according to the invention as will now be described. In such a system, if it is desired, a user at a sharing terminal can grant permissions to users of other terminals to share their browsing activities (for example clicking on links available in a web page open on their terminal or typing in URLs into their browsers). In this case, a floor control protocol such as BFCP (Binary Floor Control Protocol) is used. When such a floor control protocol is used, if a sharing participant wants to share his co-browsing activity, prior to sending the URL or activity on the web page he is browsing, then his terminal can request a permission for co-web browsing floor to a floor controller. The floor controller is typically, but not necessarily, the user of the sharing terminal. The floor controller receives the floor request, grants it, perhaps for a certain time period, and a floor response is sent back to the requester, indicating the permission for the co-web browsing floor. Then the sharing participant's terminal can send the URL or action in an XML document of an MSRP message as previously described.

In.a variant of this embodiment, instead of using MSRP, the Real-time Transport Protocol (RTP), (RFC 3550) is used. A binary payload that carries the visited URL and other required parameters is used. The new payload type is binary rather than being encoded in XML.

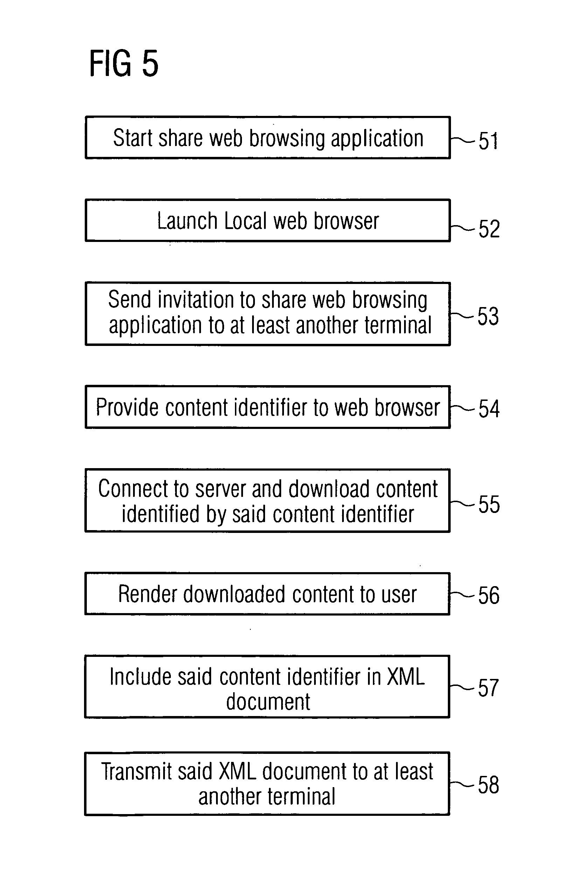

Figure 5 shows the main steps involved in co-web browsing according to the invention on the sending side. These are:
Start the share web browsing application (step 51)
Launch the sending terminal's web browser (step 52)
Send an invitation to hold a shared web browsing conference to at least one other terminal (step 53)
Provide a content identifier to the web browser on the sending terminal (step 54)
Connect to the relevant web server and download the content identified by the content identifier (step 55)
Render the downloaded content by the terminal to the user (step 56)
Include the content identifier in an XML document (step 57)
Transmit the XML document to the at least one other terminal (step 58)

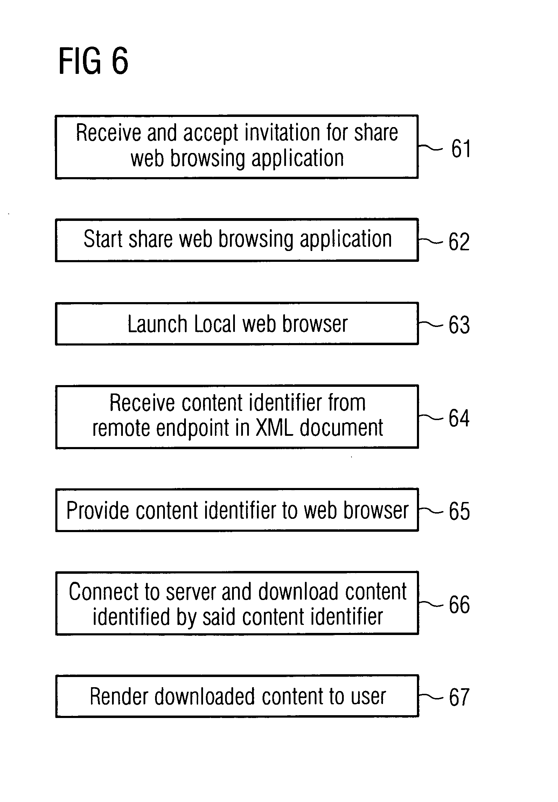

Figure 6 shows the main steps involved in co-web browsing according to the invention on the recipient side. These correspond to the steps in Figure 5 and are:
Receive and accept the invitation for a shared web browsing conference (step 61)
Start the share web browsing application (step 62)
Launch the receiving terminal's web browser (step 63)
Receive the content identifier from a remote endpoint in the XML document (step 64)
Provide the content identifier to the web browsing application (step 65)
Connect to the relevant web server and download the content identified by the content identifier (step 66)
Render the downloaded content by the terminal to the user (step 67)

It should be noted that any of the protocols and the embodiments of this invention can be used both for an online conference having one sender and a plurality of receivers as well as for a one-to-one online conference. For example, it might be used in a multimedia session established between more than two participants.

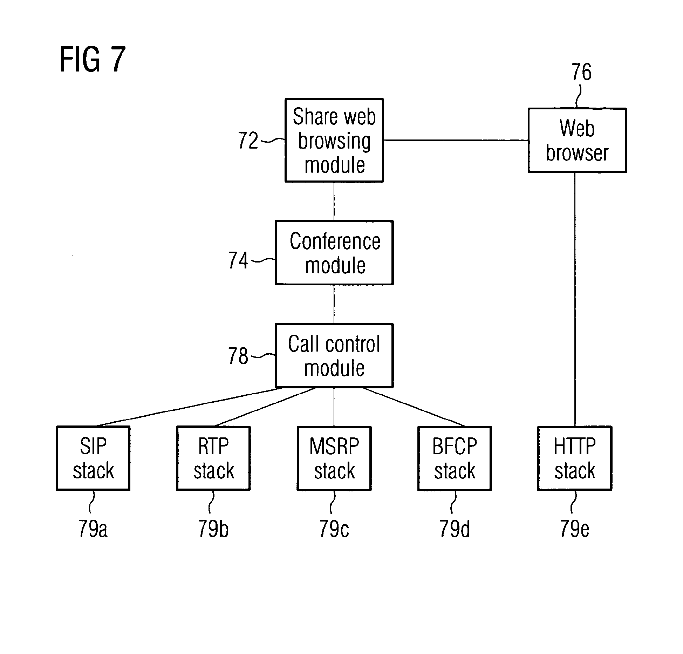

Figure 7 shows an embodiment of the invention implemented in a terminal 70. The terminal 70 comprises a share web browsing module 72 which is connected to a conference module 74 and a web browsing application 76. The conference module 74 is connected to a call control module 78 which is in turn connected to various protocol stacks: an SIP stack 79a, an RTP stack 79b, an MSRP stack 79c, a BFCP stack 79d, and an HTTP stack 79e. In a sharing terminal which is sending its browsed URLs to displaying terminals, the share web browsing module takes the URL from the web browsing application, encapsulates it in the XML document, and sends the XML document to the conference module 74. The conference module 74 creates the MSRP message and sends it to other terminals participating in an online conference. It also uses the various protocol stacks 79a to 79e as control protocols and user-plane protocols to handling signaling aspects of the online conference and to control various media streams. In a displaying terminal which is receiving browsed URLs from a sharing terminal, MSRP messages are received, the XML document is extracted in the conference module 74, the URL then extracted from the XML document by the share web browsing module 72, and then passed to the web browsing application 76 to enable the content at the URL to be downloaded to the terminal.

Accordingly, the invention provides a new protocol for transporting a URL that a sharing participant or sharing participants is/are to be automatically or manually directed to during on online conference involving co-web browsing. The protocol transports the URL together with a timestamp in real-time to the participants. Participants run their own web browser locally on their own terminals, which independently read the URL and load the web page.

One advantage provided by the invention is that a user has a web-browsing activity which occurs as a result of the operation of a web-browser on the user's own terminal. This means that users of the displaying terminals, the remote participants, can save bookmarks, record browsing histories or visited pages, acquire cookies, and do other activities related to running a browsing session on one's own terminal. The invention provides a particular advantage when used in an online conferencing system in which terminals having different capabilities are involved in an online conference, for example, a system in which some terminals are mobile terminals, for example mobile phones or wirelessly enabled (WLAN or WAN) tablets or notebooks, and desktop computers. As mentioned in the foregoing, in an online conferencing system according to the prior art, in a co-web browsing activity, a user who is browsing a web page from a mobile phone might not get mobile-customised web pages, but instead, fully-fledged layouts of the web pages. In an online conferencing system according to the invention, it is possible for the user who is browsing a web page from a mobile phone to get a different web page, customised to the number of colours displayable by the screen, the size of the screen, the font size, etc. In other words, in a co web browsing activity according to the invention, a web server providing a web page is able to customise the web page according to the terminal capabilities (for example the size of screen and the number of colours). Furthermore, the web browsing application on the mobile terminal is also able to render the web page according to user preferences (size and colour of fonts, security preferences, etc.).

In co-web browsing, it may be the case that the web page presented on displaying terminals is not exactly the same as web pages presented on a sharing terminal. This could be for various reasons, for example a secure session on the sharing terminal cannot be reproduced on the displaying terminals or in the case of dynamic web pages. Alternatively, it could be because different web browsers render the same content in slightly different way or that participants in the conference use different sizes of fonts, colour schemes, etc. However, so long as the layout of the co-web browsed web pages are similar enough, the invention still provides advantages in enabling tutorials, problem resolution (remote assistance), etc to occur.

Some web servers encode a user-dependent state into the URL. Consider that a user visits the web page http://www.example.com/index.html and is redirected to http://example.com/index.html?session-id=2309. If this user is participating in a conference and forwards the URL that contains the session ID to the other participants, such a URL may not be available to other participants, and the web server may return an error response. This is because the state typically depends on the browser, user identities, location of the user, etc. According to an embodiment of the invention, a mechanism for stripping state information from URLs is provided. Prior to forwarding the URL to other participants, the co-web browsing sharing application analyses the URL and strips the state information contained in there, so that the resulting URL does not contain state information. Then it sends this URL to remote participants via the conference server. According to another embodiment of the invention, recipients of this URL parse and analyse the received URL removing state information that otherwise would cause confusion, prior to sending the URL to the local web browsing for downloading the web page.

In a preferred embodiment of the invention, it is also possible to "transfer" an action from a sharing terminal to a displaying terminal. For example a transferred action is defined in code in such a way to enable the web browser at a displaying terminal to execute that action, for example, pressing a button represented visually on a web page. In refinement of this preferred embodiment, in order to provide the user of the receiving endpoint with greater control over the co-web browsing, and also to maintain security, the receiving endpoint may, prior to invoking a URL or an action, request permission from the user to perform the requested invocation.

An example of an XML document carrying the URL is presented below:

```
 <?xml version="1.0" encoding="UTF-8"?>
 <co-web-browsing>
    <timestamp>2001-10-27T16:49:29Z</timestamp>
    <url>http://wwww.nokiasiemensnetworks.com</url>
    <action>
        <click id="23923">button</click>
    </action>
 </co-web-browsing>
```

This comprises a first root element <co-web-browsing> which denotes the start of the document. A child <timestamp> element contains the timestamp when the URL was encoded in the document. A child <url> element contains an example of the URL that identifies the downloaded web page. An <action> element indicates the action taken by the user. This <action> element contains at least a child element indicating the type of action invoked. In the example, a <click> element indicates that the user at the sharing terminal has clicked on the button identified by a certain identity.

It should be noted that this example is according to the preferred embodiment in which actions can be "transferred" and specifically here, both a URL and an action are being "transferred". However, it might be preferred to code the XML document so that it only transfers a URL or an action. In this case, separate XML documents would be required, one to transfer the URL and one to transfer the action.

While preferred embodiments of the invention have been shown and described, it will be understood that such embodiments are described by way of example only. Numerous variations, changes and substitutions will occur to those skilled in the art without departing from the scope of the present invention. Accordingly, it is intended that the following claims cover all such variations or equivalents as fall within the spirit and the scope of the invention.

## Claims

1. A method of content rendering in which downloading content from an address at which the content is available for download at a first terminal so that the content can be rendered in a form determined by at least one of capabilities and user preferences of the first terminal causes the address to be sent to a second terminal to enable the second terminal to download the content from the address in an independent downloading operation from that carried out by the first terminal so that the content can be rendered at the second terminal in a form determined by at least one of capabilities and user preferences of the second terminal.

2. A method according to claim 1 in which rendering the content involves displaying the content visually on a display of first terminal and/or the second terminal.

3. A method according to claim 1 or claim 2 in which the content is a web page.

4. A method according to any preceding claim in which the address at which the content is stored is automatically sent to the second terminal.

5. A method according to any one of claims 1 to 3 in which the address is sent in response to a permission to send given by a user of the first terminal.

6. A method according to any preceding claim in which downloading the content at the second terminal occurs as an automatic response to receiving the address.

7. A method according to any one of claims 1 to 5 in which downloading the content at the second terminal occurs in response to a permission to download given by a user of the second terminal.

8. A method according to any preceding claim in which the address is sent between endpoints one of which is a conference server.

9. A method according to any preceding claim in which the address is transferred in a protocol envelope.

10. A method according to any preceding claim in which the address is encapsulated into a protocol message, for example in an MSRP message.

11. A method according to any preceding claim in which an action taken by a user on content rendered at the first terminal is sent to the second terminal

12. A method according to claim 11 in which the action taken by the user represents a click on a button on a displayed web page.

13. A method according to any preceding claim in which the address is encapsulated together other data, such as a timestamp.

14. A method according to any preceding claim in which the rendering is co-web browsing in which the second terminal is arranged to display a web page as a consequence of it having been browsed by the first terminal.

15. A method according to any preceding claim in which at least one of the first and second terminals is a device configured to have a wireless connection a common server.

16. A system for enabling content rendering at a first terminal and at a second terminal, the system comprising:
the first terminal, the second terminal, and a server,
the first terminal being configured to download content and
to render the content in a form determined by at least one of capabilities and user preferences of the first terminal, the first terminal being configured to act in response to the downloading of content to send the address at which the content is available for download to the second terminal
the second terminal being configured to receive the address and to download the content in an independent downloading operation from that carried out by the first terminal, the second terminal being configured to render the content terminal in a form determined by at least one of capabilities and user preferences of the second terminal.

17. An online conference server for enabling rendering of content at a first terminal and at a second terminal, the first terminal being configured to download content from an address at which the content is available for download and to render the content in a form determined by at least one of capabilities and user preferences of the first terminal, the first terminal being configured to act in response to downloading of content to send the address to the server, wherein
the server is configured to receive the address from the first terminal and to send it to the second terminal to enable the second terminal to download the content in an independent downloading operation from that carried out by the first terminal, the second terminal being configured to render the content terminal in a form determined by at least one of capabilities and user preferences of the second terminal.

18. A terminal capable of rendering of content from an address at which the content is available for download, the content being capable of being rendered at another terminal, the terminal being configured to:
download the content and to render the content in a form determined by at least one of capabilities and user preferences of the terminal,
to act in response to the downloading of content to send the address at which the content is available for download to the other terminal
the other terminal being configured to receive the address and to download the content in an independent downloading operation from that carried out by the first terminal, the second terminal being configured to render the content terminal in a form determined by at least one of capabilities and user preferences of the second terminal.

19. A computer program product comprising software code that when executed on a computing system performs a method of content rendering comprising downloading content from an address at which the content is available for download at a first terminal so that the content can be rendered in a form determined by at least one of capabilities and user preferences of the first terminal causes the address to be sent to a second terminal to enable the second terminal to download the content from the address in an independent downloading operation from that carried out by the first terminal so that the content can be rendered at the second terminal in a form determined by at least one of capabilities and user preferences of the second terminal.

20. A computer program product according to claim 19 in which computer program product is stored on a computer-readable medium.
